# EUROPEAN PATENT APPLICATION

(11) **EP 4 663 010 A1**
(43) Date of publication of application: **17.12.2025**
(21) Application number: 25181106.3
(22) Date of filing: 05.06.2025
(51) Int. Cl.: A01J 5/007, A01J 9/00, A01J 11/02, F04D 15/02, A01J 11/04

(54) **METHOD FOR PUMPING MILK MILKED USING A MILKING SYSTEM, AND MILKING SYSTEM FOR THE METHOD**

(30) Priority: 10.06.2024 NL 2037912
(71) Applicant: Lely Patent N.V., 3147 PB Maassluis (NL)
(72) Inventor: JONGENEEL, Dignus Johannes, 3147 PB Maassluis (NL)
(74) Representative: Octrooibureau Van der Lely N.V.

(57) **Abstract**

A method for pumping milk milked using a milking system (1) is described. The milking system comprises a milking cup (2) having a milk hose (3) thereon, a milk glass (4) fluidically connected thereto, having a milk storage vessel (6) fluidically connected via a milk line (5), a milk pump (7) and a control unit (9). The milking system further comprises a measuring device (8) for measuring how heavily the milk pump is loaded. The method comprises milking milk, collecting the milk milked in the milk glass, pumping the milk milked from the milk glass via the milk line to the milk storage vessel using the milk pump after the milking operation, and further measuring the load indication of the milk pump using the measuring device during said pumping, and delaying or pausing the milk pump by means of the control unit in a delay action if the load indication is lower than a predetermined load threshold. A lower load indication may indicate undesired inclusion of air. Delaying or even pausing the milk pump can give said air an opportunity to escape, after which the pumping away is more efficient and can compensate for the delay action.

## Description

The present invention relates to a method for pumping milk milked using a milking system. In this case, the milking system comprises at least one milking cup having a milk hose thereon, a milk glass fluidically connected to the milk hose, a milk storage vessel fluidically connected to the milk glass by a milk line, a milk pump for pumping the milk milked from a milking operation from the milk glass to the milk storage vessel, a measuring device for generating a load indication of the milk pump, and a control unit for controlling the milking system. The method comprises milking milk from a dairy animal using the milking cup and collecting the milk milked in the milk glass via the milk hose, and pumping the milk milked from the milk glass via the milk line to the milk storage vessel with the aid of the milk pump after the milking operation has ended.

Such a method is widely known from automatic milking devices. In particular, but not exclusively, robotic milking devices use a milk glass to first collect the milk before pumping it to, for example, a stationary drinking-milk tank or one positioned on a tanker.

It appears in practice that the pumping action sometimes takes longer than desired. This limits the capacity of the milking device.

It is therefore an object of the present invention to adapt the known method in such a way that the capacity of the milking device can improve.

The invention achieves this object by means of a method according to Claim 1, wherein the milking system further comprises a measuring device for generating a load indication of the milk pump, which is an indication of how heavily the milk pump is loaded, wherein the method further comprises measuring a load indication of the milk pump using the measuring device during said pumping, and delaying, in particular pausing, the milk pump by means of the control unit in a delay action if the load indication is lower than a predetermined load threshold.

The milk pump operates less efficiently under certain conditions by attempting to concomitantly pump air present in the system. It is known per se to start a pumping-away action by allowing air to escape for a certain time, and only then to start the pumping; this is referred to as 'priming' the milk pump. It is not always possible to predict when there is air in the system, or how much air is in the system, so always priming the milk pump is not always necessary, and thus capacity-limiting in turn. The inventor based the invention on the insight that the load of the milk pump will be lower during the concomitant pumping of air. The load of the milk pump can be measured. By measuring the load of the milk pump, the control unit itself can determine when a delay step should be initiated, in order to allow air to escape and therefore to allow the pump to operate more efficiently to such an extent that the total time to pump away the milk from the milking operation will be shorter than without the delay step.

It is noted here that 'priming' itself, in other words the standard waiting for a certain time after opening the connection between milk glass and milk pump to begin pumping, is outside the scope of the invention. This is because said priming always happens, thus even if it is not necessary, and in most cases a kind of compromise will be sought between, on the one hand, a waiting time which allows much or even probably all of the air to leak away prior to pumping and, on the other hand, a waiting time which is not too long. In this case, therefore, there is furthermore no measurement of the load of the milk pump. By contrast, the invention makes use of measuring the load of the milk pump. If this proves to be relatively low, that is an indication that there is still too much air present, in which case, by means of a delay step, said air is given the opportunity to leak away. However, said waiting or the like thus does not occur as standard, but only if a reason therefor is found in the form of a measured low load indication. Nevertheless, in embodiments, it remains possible to still incorporate a fixed waiting time prior to pumping, *in addition* to the invention, in other words always and without dependence on a measured load indication. Such a waiting time may in that case, however, be selected to be shorter than is in itself customary, since any larger than standard or minimal quantity of air to leak away will be detected by means of a load indication measurement after said standard waiting time. According to the invention, a delay step will then be initiated.

The delay step therefore means that the pump operation, or the full pump operation, of the milk pump may only start once a time has elapsed if the measuring device has previously established that the load of the milk pump was below a threshold. It should be noted that said delay step can be carried out during an ongoing pumping-away action, with the pumping action thus even being actively interrupted after having previously been started, but also that it can be added at the start of the pumping-away action in a *subsequent* milking operation. As a result, a subsequent pumping-away action cannot start, for example, immediately or after a standard "primer" waiting time, but only after an extended waiting time. In other words, it is possible to choose to carry out a delay step as standard in the future, thus without once again measuring the load of the milk pump, if the other conditions are considered equal or sufficiently equal. Here too, however, it has thus been necessary at least once to measure the load of the milk pump during pumping away.

Particular embodiments are mentioned in the dependent claims, and in the following part of the introduction of the description.

In embodiments, the delay step comprises stopping the milk pump for a predetermined time. During this time, the waiting time, the air that has become apparent due to the lower load of the milk pump can escape. The predetermined time can be a fixed time, which is empirically established. For example, the waiting time can be a number of seconds, such as between 2 and 10 seconds, this being non-limiting. In practice, the number of seconds may depend, for example, on the type of milk pump, the geometry of the milking system, in particular of the milk glass and the milk line between the milk glass and the milk pump, etc.

However, it is also possible for the control unit to set the waiting time prior to the delay step to a value to be selected. In embodiments, the predetermined time is determined by the control unit in dependence on the quantity of milk from the milking operation to be pumped away. For example, the hydrostatic counterpressure of the milk in the milk glass can affect the flowing away of the air that is still present. If there is less milk in the milk glass, said counterpressure is lower and, in many cases, the air can leak away more easily, although it may also be the case that said counterpressure can in fact more easily displace the air at the bottom. All this will be easy to establish in practice.

It is noted here that the quantity of milk to be pumped away in the milk glass can be determined with the aid of a milk meter that is in practice almost always, and certainly preferably, provided. This milk meter can, for example, directly measure the quantity by measuring the increase in weight of the milk glass, by measuring and integrating the milk flow through the milk hose to the milk glass during the milking operation, etc. The control unit could even work with an expected quantity of milk based on the lactation curve and the milking interval of the milked dairy animal, but this is of course less accurate than an actually measured quantity of milk.

The selection by the control unit of the delay step, in particular of the waiting time, can also be dynamic, based for example on feedback of the total time for pumping away the milk from the milking operation, thus including the one or more delay steps. For example, the control unit can determine a total ramp-up time as the sum of a waiting time of the delay step and the time span immediately thereafter up to and including the point in time when the load indication reaches a predetermined portion of the nominal or expected load indication of the milk pump. The control unit can then set a different waiting time for each successive milking operation and in doing so determine the ramp-up time, and can repeat these steps and thereby minimize the ramp-up time. In this case, a change in the waiting time in a first direction, positive or negative, which leads to a reduction in the ramp-up time will of course lead to a further change in the waiting time in said direction, and vice versa. The nominal load indication is in this case the load corresponding to the standard operation of the milk pump, and the expected load indication is the load indication corresponding to the selected operation of the milk pump, if it can be operated in a variable manner. This embodiment is based on the insight that the pump load will increase the more air has leaked away and thus the less air is in the milk pump. Such a dynamic variation may in particular also be carried out in dependence on the quantity of milk to be pumped away, that is to say that the waiting time associated with a specific quantity of milk to be pumped away, or quantity range for said milk, is only changed and tested if the current quantity of milk to be pumped away corresponds to said specific quantity or quantity range.

In the delay steps mentioned above, there is in each case a waiting time during which pumping is not carried out. As an alternative, the delay step comprises operating the milk pump at a speed reduced by at least a predetermined percentage. It is possible in this case for the control unit, in the delay step, to operate the milk pump for a period of time at a lower capacity, such as at a base capacity of, for example, 5%, 10%, 50% or the like. In such a case, too, air will be able to leak away much more easily than during full operation of the milk pump, but the milk pump does not need to be completely shut off. Said time of operating at a lower capacity is also referred to in the context of the present invention as waiting time.

It is possible for more than one delay step to be carried out during the pumping away of the milk from the milking operation. This is because the control unit will in principle initiate a delay step whenever the load indication is below the load threshold. The delay steps may in that case, for example, each be of short duration. In this way, the milking system can dynamically adapt to a situation in which it is necessary for more air to leak away than leaks away in a first delay step, without it always being necessary to wait for an excessively long time already during the very first delay step. It is also not impossible for air to enter the milking system specifically during the pumping away, at least in or near the milk to be pumped away, such as due to a leak. The milking system can adjust dynamically in that case, too. If the leak continues, the control unit would decide to initiate a delay step twice or even (many) more times during one and the same pumping-away action. It may even be the case that the measured load indication does not increase after a delay step, for example because more air has leaked in than leaked away. In embodiments, it is possible for the control unit to decide to issue an alarm notification if the load indication measured by the measuring device, as a result of the delay step, is less than a predetermined increase threshold and/or if more than a predetermined number of delay steps have been carried out during the pumping away and subsequently the measured load indication falls below the load threshold again.

It is possible for the control unit to carry out a delay step immediately after establishing that the load indication falls below the load threshold. However, this may cause a delay step to start already if there is a "glitch" in the pump operation, which is undesirable in such a case. In embodiments, the delay step is therefore carried out if the load indication remains below the load threshold for a predetermined measurement time. The measurement time is, for example, 1 second, or another measurement time to be established in practice that is long enough to exclude 'glitches', but fast enough not to cause unnecessary delay in setting the delay step and thereby reduce the total capacity of the milking system.

The load threshold is not subject to any particular limitation. For example, in embodiments, the load threshold is a percentage of a predetermined expected or nominal load indication. For example, the threshold is at a value of 90% of the nominal or expected load indication, so when the load indication is 90% or lower, the control unit will decide to initiate a delay step. Of course, a different threshold value is also possible, and a person skilled in the art can easily select it in practice. For example, the conditions of the situation, such as milk yield, associated hydrostatic pressure, geometry of the milking system and the pump type are taken into account in this case.

The load indication itself is also not subject to any particular limitation with regard to the type of variable. In embodiments, the load threshold is or comprises a consumed power or current (in the case of fixed speed), or a variable related to a speed of the milk pump (in the case of variable speed). The consumed power or the consumed current is an electrical indication of the load of the milk pump. The measuring device is in that case configured to measure the consumed power, or the current through the milk pump or its motor. This choice is particularly applicable to milk pumps that operate at a speed that is in principle fixed, which will vary at most due to the load on the milk pump. As an alternative, it is also possible for the milk pump to have a fixed power or consumed current, with the speed being largely determined by the load. Said speed is then specifically an indication of the load, with the measuring device then being configured to measure either the speed itself directly or a variable related to the speed, such as a pitch.

In another aspect of the invention, it relates to a milking system according to Claim 8, comprising at least one milking cup having a milk hose thereon, for milking milk from a teat of a dairy animal, a milk glass fluidically connected to the milk hose for collecting the milk milked from a milking operation, a milk storage vessel fluidically connected to the milk glass by a milk line for storing milk from a plurality of milking operations, a milk pump for pumping the milk milked from a milking operation from the milk glass to the milk storage vessel, and a control unit for controlling the milking system, further comprising a measuring device for generating a load indication of the milk pump, which is an indication of how heavily the milk pump is loaded, wherein the milking system is configured to carry out the method according to the present invention.

This milking system is the system counterpart of the method according to the invention, and in principle has the same advantages and effects as described for the various embodiments of the method. These will therefore not be needlessly repeated.

The type of milk pump is in principle not subject to any limitation. In particular, however, the milk pump is or comprises a rotodynamic pump, in particular a centrifugal pump. Rotodynamic pumps, also known as turbopumps, such as centrifugal pumps, operate using a body that displaces fluid, such as milk in this case, with the aid of a rotating body. These pumps have the disadvantage in practice that air can more easily disrupt the pump operation. Contrasted to this are volumetric pumps, which are better able to displace air by entraining it in the volume pumped away. Nevertheless, the invention applies in principle to all types of pumps, although the advantage thereof will not be equally great for all types of pump.

The invention will now be explained in more detail on the basis of some non-limiting exemplary embodiments and the drawing. In the drawing:
- Figure 1 schematically shows a milking system according to the invention, and
- Figures 2a and 2b show two schematic diagrams of milk pump loads during pumping of milk.

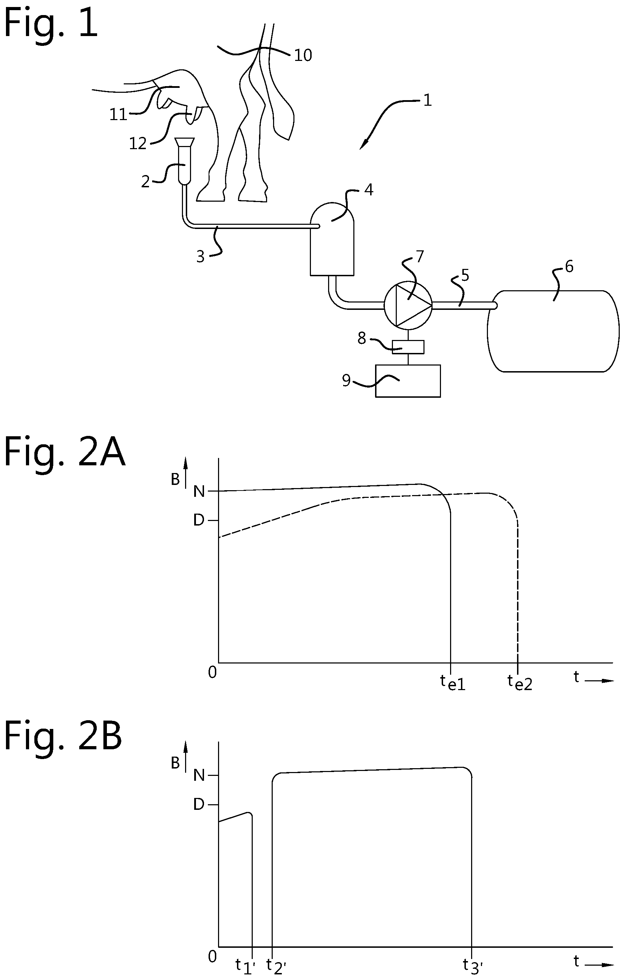

Figure 1 schematically shows a milking system 1 according to the invention, with a milking cup 2, a milk hose 3 to a milk glass 4, with a milk line 5 to a milk tank 6. A milk pump is indicated by 7, having a load meter 8, and a control unit 9. A dairy animal is indicated by 10, and has an udder 11 with teats 12.

The milking system 1 is depicted merely in a highly schematic manner, with the omission of many parts known per se, such as a vacuum pump for the milking vacuum. Such details will be added by a person skilled in the art without any difficulty. In addition, no robot arm is illustrated, for automatic attachment of the milking cup 2 to the teats 12. The invention is therefore not limited to this, but is also applicable to other milking systems, such as conventional milking systems in which the milking cups 2 are attached by hand, provided that the milking system has a milk glass 4 for temporary collection of the milk from a milking operation. The number of milking cups 2 is in practice determined by the dairy animals 10 to be milked and is for example two for goats and four for cows.

In a milking operation, milk is drawn from the teat 12 to the milk glass 4 via the milking cup 2 and the milk hose 3. There, the milk is stored during the milking operation, inter alia in order to be able to assess the milk and, if required, to pump it to a destination other than the milk tank 6 for milk for human consumption. Regardless of the destination, the milk glass 4 should be emptied after the end of the milking operation. The milk pump 7 is used for this purpose. In the following, it is assumed that the milk is pumped by the milk pump 7 via the milk line 5 to the milk tank 6, but, as mentioned, it may also be another destination, such as a receptacle for separated milk, or even the sewer.

Ideally, the milk pump 7 will pump only milk. In practice, it may be the case that a certain quantity of air has entered the system. This air affects the operation of the milk pump 7, in particular if it is of the rotodynamic type, such as a centrifugal pump. Unlike with volumetric pumps, with rotodynamic pumps this air is often somewhat more difficult to remove. This air is noticeable by the fact the efficiency during the pumping away of the air decreases, and it therefore takes longer for the milk from the milking operation to be pumped away. Consequently, this undesirably lowers the capacity of the milking system 1.

The decreased pump efficiency is also measurable in the load of the milk pump. Without being bound by an explanation, the inventor suspects that the pumping of a milk-air mixture is easier and thus exerts a lower load on the milk pump 7. The load of the milk pump 7 is measured here with the aid of the measuring device 8. If the milk pump 7 is of a type that in principle operates at a fixed speed, such as with control by a variable-frequency drive, the load measuring device 8 may be, for example, a current meter, or another meter providing a load indication, such as a consumed-power meter. If the milk pump 7 is of a different type, the measuring device 8 may be of a different suitable type, for example specifically a frequency meter if the consumed power of the milk pump is constant, but the speed is variable, depending on the resistance. Other types are not excluded.

According to the invention, the control unit 9 uses the measurement signal from the measuring device 8 to start a delay step if required, during which the milk pump 7 is stopped for a predetermined time, with the aim of allowing air to leak away out of the system.

Figures 2a and 2b show some schematic diagrams of milk pump loads during pumping of milk. The load B of the milk pump is plotted on the vertical axis, in an arbitrary unit. The time t of the pumping is plotted on the horizontal axis.

In Figure 2a, the solid line shows the pumping of a certain quantity of milk, such as 10 litres, without the milk pump being affected by air in the system. It can be seen that the load rises right from the start, i.e. t = 0, to the nominal load N, and also stays there until the pumping is finished at time *tₑ₁*.

The dashed line represents the situation in which there is indeed a disruptive quantity of air in the system. The load does initially rise, but only to a value below a load threshold D, about which more below. It can also be seen that the load then gradually increases to (approximately) the nominal load N, due to the slow pumping away of the air out of the system. However, it can also be seen that pumping the same quantity of milk in total now takes slightly longer, now up to *tₑ₂*.

Figure 2b again shows a schematic load diagram of pumping this same quantity of milk in the presence of air, but now according to a method according to the invention. Of course, the load diagram starts at the same load as the dashed-line diagram in Figure 2a. After a measurement time *t'₁,* the pump waits for a while, until *t'₂,* before pumping further. It appears that the waiting time from *t'₁* to *t'₂* was sufficient to allow the air to leak away out of the system. This is apparent from the load after the waiting time, which now goes straight to nominal *N*. It can also be seen that the total time to pump away the quantity of milk, i.e. up to *t'₃*, is shorter than the corresponding time *tₑ₂* from Figure 2a if there is no waiting.

The following comments are made in this regard.

The measurement time used is *t'₁* (seconds). This time can in principle be freely selected, as long as the measurement gives a reliable result and does not immediately result in a waiting time in the case of a meaningless "glitch" in the pump load. For example, a waiting time of half to one or a few seconds is usable, although under other conditions a shorter or longer time may also prove usable. Furthermore, air does not have to be present in the system only at the start of a pumping action. For example, the pumping action may have been interrupted for another reason or there is an air leak in the system. In such cases, and possibly other cases, air may also be present in the system at a later time during the pumping-away action. In that case, too, the measuring device 8 can establish that the load of the milk pump falls below a threshold value *D*, after which the control unit decides to initiate a delay step.

The threshold value *D* can also in principle be freely selected and is in practice selected in such a way that, in the case of a load below said threshold value, there is also actually a disruptive quantity of air in the system. After all, a delay step in the event of an excessively small quantity of air would lead to unnecessary delay. In practice, a person skilled in the art will easily be able to select a suitable threshold value *D*. For example, the threshold value is a percentage of the nominal load of the milk pump, such as 90%.

The quantity of air may be the result of a previous action by the milking system 1. For example, the milk glass 4 may be subjected to extra emptying by pumping, such as after a cleaning operation (to pump away rinse water), or in the case of extra emptying by pumping for the purpose of a sampling of milk (to prevent carry-over). In such cases, it may be the case that more air is included.

The waiting time, in the example from *t'₁* to *t'₂,* can also be freely selected. The purpose of the waiting time is to make the total pumping action shorter than without the delay step during said waiting time. This waiting time, too, can thus be empirically determined or optimized. In practice, the waiting time will certainly depend on the quantity of air in the system, on the geometry of the system, the type of pump, on the quantity of milk in the milk glass (which provides hydrostatic counterpressure), etc. A waiting time may thus be selected for each condition, in particular depending on the quantity of milk to be pumped.

It is also possible for the control unit 9 itself to optimize the waiting time. For example, it can do this by setting a different waiting time during any delay step in similar situations (same quantity of milk, same previous action of the milking system, etc.) and then measuring how long the total pumping action takes. Of course, the control unit can then constantly improve its iterations towards a waiting time that entails the shortest total pumping time.

The above applies both to delay actions carried out at the start of a pumping action and delay actions during the subsequent course thereof. In addition, it is possible for the control unit to start with a delay step as standard in the case of particular actions, such as the extra emptying of the milk glass by pumping. However, it should be noted that in that case, too, a suitable waiting time is selected on the basis of one or more measurements of the load of the milk pump in previous milking operations.

In addition, it is possible for more than one delay step to be initiated during pumping. For example, there may be an air leak, with the result that the load falls below the load threshold again. Or it may be that the delay step did not last long enough to allow sufficient air to leak away. It may then be the case that the measuring device once again measures during said further pumping that the load falls below the load threshold. The control unit can then once again decide to initiate a delay step.

The selected optimum waiting time, optionally as a function of one or more variables, may also vary over time. After all, wear can have an effect on air inclusion, leaking-away behaviour or the pump characteristics. Of course, it may then be the case that the control unit once again optimizes the waiting time. This will certainly happen if the load is still below the load threshold after the "old" waiting time. However, if that is not the case, it may be that the optimum waiting time has nevertheless changed. It is then recommended to allow the control unit to once again optimize the waiting time after a predetermined period, for example a few months or a certain number of milking operations.

In a practical example, in an Astronaut^{®} A5 from Lely Industries, 8 kg of milk was milked after an "extra emptying of milk glass" action and then pumped away using a milk pump with a nominal load of 2.0 A. In the event that the pumping away is started immediately, so without any delay step, this lasted between 25 and 30 seconds, and the current through the milk pump was initially 1.7 A, slowly rising to 1.9 A. With 2 seconds of waiting, the current was initially 1.8 A, so already higher, with said current slowly rising to 1.9 A, and the pumping away took between 20 and 25 seconds. An optimum waiting time was established at between 6 and 8 seconds. In this case, the current was almost immediately 2.0 A and the pumping away took 12 seconds. This shows that waiting longer actually results in faster emptying.

## Claims

1. Method for pumping milk milked using a milking system,
wherein the milking system comprises
- at least one milking cup having a milk hose thereon,
- a milk glass fluidically connected to the milk hose,
- a milk storage vessel fluidically connected to the milk glass by a milk line,
- a milk pump for pumping the milk milked from a milking operation from the milk glass to the milk storage vessel, and
- a control unit for controlling the milking system,
wherein the method comprises
- milking milk from a dairy animal using the milking cup and collecting the milk milked in the milk glass via the milk hose,
- pumping the milk milked from the milk glass via the milk line to the milk storage vessel with the aid of the milk pump after the milking operation has ended,
wherein the milking system further comprises a measuring device for generating a load indication of the milk pump, which is an indication of how heavily the milk pump is loaded, wherein the method further comprises
- measuring the load indication of the milk pump with the aid of the measuring device during said pumping, and
- delaying, in particular pausing, the milk pump by means of the control unit in a delay step if the load indication is lower than a predetermined load threshold.

2. Method according to Claim 1, wherein the delay step comprises stopping the milk pump for a predetermined time.

3. Method according to Claim 1, wherein the delay step comprises operating the milk pump at a speed reduced by at least a predetermined percentage, in particular for a predetermined time.

4. Method according to Claim 2 or 3, wherein the predetermined time is determined by the control unit in dependence on the quantity of milk from the milking operation to be pumped away.

5. Method according to one of the preceding claims, wherein the delay step is carried out if the load indication remains below the load threshold for a predetermined measurement time.

6. Method according to one of the preceding claims, wherein the load threshold is a percentage of a predetermined expected or nominal load indication.

7. Method according to one of the preceding claims, wherein the load threshold is or comprises a consumed power or current, or a variable related to a speed of the milk pump.

8. Milking system comprising at least one milking cup having a milk hose thereon, for milking milk from a teat of a dairy animal, a milk glass fluidically connected to the milk hose for collecting the milk milked from a milking operation, a milk storage vessel fluidically connected to the milk glass by a milk line for storing milk from a plurality of milking operations, a milk pump for pumping the milk milked from a milking operation from the milk glass to the milk storage vessel, and a control unit for controlling the milking system,
further comprising a measuring device for generating a load indication of the milk pump, which is an indication of how heavily the milk pump is loaded,
wherein the milking system is configured to carry out the method according to one of Claims 1-7.

9. Milking system according to Claim 8, wherein the milk pump is a rotodynamic pump, in particular a centrifugal pump.
